Europäisches Patentamt

European Patent Office

Office européen des brevets

(19)

(11) Veröffentlichungsnummer : **0 074 360**
**B1**

(12)

# EUROPÄISCHE PATENTSCHRIFT

(45) Veröffentlichungstag der Patentschrift :
21.11.85

(51) Int. Cl.⁴ : **F 24 J** 3/00, F 25 B 49/00

(21) Anmeldenummer : 82900629.5

(22) Anmeldetag : 02.03.82

(86) Internationale Anmeldenummer :
PCT/DE 82/00044

(87) Internationale Veröffentlichungsnummer :
WO/8203265 (30.09.82 Gazette 82/23)

(54) VERFAHREN ZUM REGELN EINER SORPTIONSWÄRMEPUMPE.

(30) Priorität : 14.03.81 DE 8107914 U

(43) Veröffentlichungstag der Anmeldung :
23.03.83 Patentblatt 83/12

(45) Bekanntmachung des Hinweises auf die Patenterteilung : 21.11.85 Patentblatt 85/47

(84) Benannte Vertragsstaaten :
AT CH DE FR GB LI LU NL SE

(56) Entgegenhaltungen :
EP-A- 0 001 858
EP-A- 0 010 551
EP-A- 0 038 990
DE-A- 1 401 483
DE-A- 1 401 548
DE-A- 2 838 715
DE-A- 2 854 055
DE-A- 2 927 408
DE-B- 1 021 389
DE-C- 718 956
DE-C- 973 197
US-A- 2 272 871
US-A- 3 527 061

(73) Patentinhaber : Joh. Vaillant Gmbh u. Co
Berghauser Strasse 40 Postfach 10 10 20
D-5630 Remscheid 1 (DE)
DE LU SE
VAILLANT S.A.R.L
4, Rue des Oliviers Orly-Sénia 326
F-94537 Rungis Cedex (FR)
FR
VAILLANT Ges.m.b.H
Forchheimergasse 7 Postfach 56
A-1233 Wien (AT)
AT
Vaillant Ltd.
Vaillant Building, Aerodrome Way Heston Industrial
Estate
GB-Hounslow, Middx. TW5 9QB (GB)
GB
SCHONEWELLE B.V.
Ellermanstraat 17
NL-1099 BX Amsterdam (NL)
NL
Vaillant GmbH
Riedstrasse 8
CH-8953 Dietikon 1 (CH)
CH LI

(72) Erfinder : KANTNER, Alexander
Paul-Windgassen-Strasse 99
D-5630 Remscheid 11 (DE)

(74) Vertreter : Heim, Johann-Ludwig
c/o Joh. Vaillant GmbH u. Co Postfach 10 10 20
Berghauser Strasse 40
D-5630 Remscheid 1 (DE)

Jouve, 18, rue St-Denis, 75001 Paris, France

EP 0 074 360 B1

## Beschreibung

Die vorliegende Erfindung bezieht sich auf ein Verfahren zum Regeln einer Sorptionswärmepumpe gemäß dem ersten Teil des Anspruchs 1 oder 2.

Solche Sorptionswärmepumpen, seien es Absorptions- oder Resorptionswärmepumpen, werden in zunehmendem Maße zur Beheizung von Wohnhäusern eingesetzt. Hier sollen diese Wärmepumpen Umlaufwasserheizer oder Kessel als Wärmequellen ersetzen. Die Verbraucher solcher Wärmepumpen bestehen in der Regel aus Fußboden-, Radiatoren- oder Konvektorenheizungen, in der Regel mit Thermostatventilen ausgerüstet, und Brauchwasserspeichern.

Aus der EP-A-1 858 ist ein Heizverfahren mit einer bivalenten Wärmepumpe zum Heizen von Gebäuden bekanntgeworden, bei dem oberhalb einer bestimmten Temperaturschwelle die Heizanlage als Wärmepumpe arbeitet, während sie bei Unterschreiten der Temperaturgrenzschwelle als Kessel arbeitet. Im letzteren Falle wird der gesamte Vorrat an Absorptionsflüssigkeit in einem Absorptionsgefäß gespeichert. Hierzu ist ein Außentemperaturfühler vorgesehen, dessen Signale zur Aufrechterhaltung eines bestimmten Temperaturniveaus auf ein Gasventil des Brenners wirken. Der Außentemperaturfühler erfasst somit nicht eine Änderung des Verbraucherverhaltens. Weiterhin ist ein Druckfühler im Austreiber vorgesehen, der aber nicht zu einer Druckregelung dient, sondern lediglich zum Überwachen des Kesselbetriebes, da bei Ansteigen eines vom Druckgeber gemessenen Drucks ein Absperrventil geschlossen wird, sodaß die Flüssigkeitszufuhr zum Austreiber unterbrochen wird. Diese Betriebsweise tritt nicht im Wärmepumpenbetrieb auf. Weiterhin ist ein dritter Druckfühler vorhanden, der dem Verdampfer zugeordnet ist und den in ihm herrschenden Druck abfühlt.

Aus der DE-B-1 021 389 ist ein Verfahren und eine Vorrichtung zum Betrieb einer kontinuierlich wirkenden Absorptionskältemaschine bekanntgeworden, bei der beim Anfahren der Kältemaschine die Zuleitung zum Kondensator so lange gesperrt ist, bis im Austreiber die zum kontinuierlichen Betrieb erforderlichen Druck- und Temperaturverhältnisse erreicht sind. Hier handelt es sich demgemäß um eine Anfahrsteuerung und nicht um eine Druckbeziehungsweise Temperaturregelung im Hochdruckteil der Wärmepumpe.

Aus der US-A-2 272 871 ist eine Absorptionswärmepumpe bekanntgeworden, deren Austreiber nicht von einem Brenner, sondern mit Dampf beheizt wird. Den Verbraucher zu der US-Patentschrift bildet eine Luftheizung. Die eine Wärmeanforderung durch den Verbraucher kann bei dieser Art Wärmepumpe nicht erfasst werden.

Schließlich ist aus der DE-A-2 838 715 eine Absorptionswärmepumpe mit einem brennstoffbeheizten Austreiber bekannt geworden, bei der die Primärleitung des Wärmetauschers des Temperaturwechslers von einer Bypassleitung überprüft ist, deren Durchsatz von einem Ventil nach Maßgabe der von einem Fühler für die Außentemperatur gesteuert ist. Falls die Vorlauftemperatur des die Heizkörper enthaltenden Heizkreises infolge geringeren Wärmebedarfs abgesenkt werden kann, so ist dies meist eine Folge steigender Außentemperatur. Diese steigende Außentemperatur veranlasst den Temperaturfühler zu einem schlagartigen Umstellen des zugehörigen Dreiwege-Umsteuerventils, wodurch der Wärmetauscher des Temperaturwechslers außer Funktion gesetzt wird. Damit kommt die hocherhitzte arme Lösung unmittelbar zum Expansionsventil, womit die letzte Aufheizstufe für den Verbraucher ausfällt. Somit wird in Abhängigkeit der Außentemperatur die Verbrauchervorlauftemperatur in zwei Stufen gesteuert.

Der vorliegenden Erfindung liegt die Aufgabe zu Grunde, ein Regelverfahren für eine Sorptionswärmepumpe anzugeben, das in Abhängigkeit von der Verbraucherwärmeanforderung die Einspeisung von Primärenergie in den Austreiber minimiert und zugleich einen ausreichenden Durchsatz von Lösungs- und Kältemittel sicherstellt, um den internen Kreislauf der Wärmepumpe zu optimieren.

Diese Aufgabe wird erfindungsgemäß bei einem Verfahren gemäß dem Oberbegriff durch die in den kennzeichnenden Teilen der Nebenansprüche angegebenen Maßnahmen gelöst.

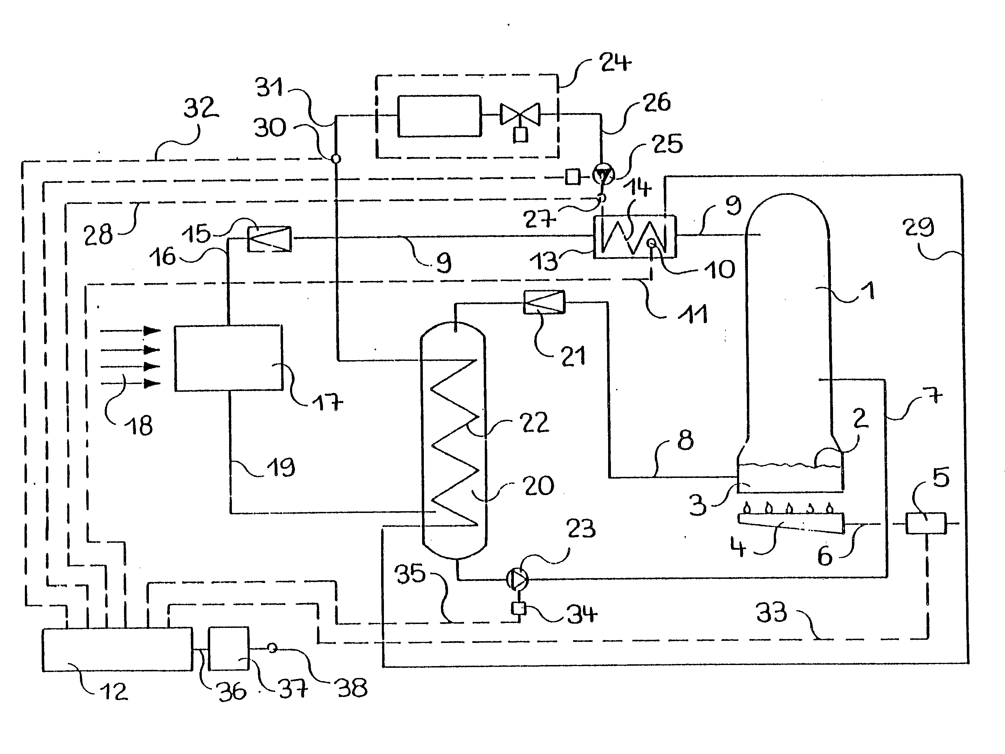

Weitere Ausgestaltungen und besonders vorteilhafte Weiterbildungen der erfindungsgemäßen Verfahren sind aus den Unteransprüchen sowie der nachfolgenden Beschreibung ersichtlich, die ein Ausführungsbeispiel der Erfindung anhand der Figur der Zeichnung näher erläutern.

Die Figur der Zeichnung stellt eine Prinzipdarstellung einer Absorptionswärmepumpe dar.

Ein Austreiber oder Kocher 1 mit gegebenenfalls nachgeschaltetem Rektifikator ist bis zu einem Pegel 2 mit einer reichen Lösung 3, bestehend aus in Wasser gelösten Ammoniakdampf, gefüllt und wird von einem Gasbrenner 4 beheizt, der über eine mit einem Magnetventil 5 versehene Gasleitung 6 gespeist ist.

Dem Austreiber 1 wird die reiche Lösung über eine Rückleitung 7 zugeführt, unter der Einwirkung der Primärenergie des Brenners 4 wird die reiche Lösung in arme Lösung und Kältemitteldampf getrennt, wobei die arme Lösung über eine Leitung 8, der Kältemitteldampf über eine Leitung 9 abgeführt werden. Der Hochdruckteil der Sorptionswärmepumpe wird von einem Druckfühler 10 überwacht, der gemäß einer Variante der Erfindung auch ein Temperaturfühler sein kann. Dieser Druckfühler 10 kann an beliebiger Stelle im Hochdruckteil der Sorptionswärmepumpe angeordnet sein, also auch im Kondensator. Der Hochdruckteil reicht vom Lösungsmittel bis zum Kältemittelexpansionsventil unter Ein-

schluß von Kocher und Kondensator. Der Fühler 10 ist über eine Meßleitung 11 mit einem Regler 12 verbunden. Ein Temperaturfühler könnte im Kocher oder im Kondensator beziehungsweise der Leitung zwischen beiden angeordnet sein. Die Kältemitteldampfleitung 9 führt zu einem Kondensator 13, der als Wärmetauscher ausgebildet ist und von einer Rohrschlange 14 durchsetzt ist. Stromab des Kondensators 13 setzt sich die Leitung 9 fort und führt zu einem Expansionsventil 15, dessen Ausgang über eine Leitung 16 mit einem Verdampfer 17 verbunden ist. Der Verdampfer ist in bekannter Weise einer Umweltenergiequelle 18, beispielsweise Luft, ausgesetzt. Vom Verdampfer führt eine Kältemitteldampfleitung 19 zu einem Absorber 20, dessen Innenraum auch mit der Leitung 8 unter Zwischenschaltung eines weiteren Expansionsventils 21 für die arme Lösung verbunden ist. Den Innenraum des Absorbers durchsetzt eine Rohrschlange 22, so daß der Absorber als Wärmetauscher wirkt. An den Ausgang des Absorbers ist die mit einer Umwälzpumpe 23 versehene Leitung 7 angeschlossen.

Ein Verbraucher 24, der aus einer Vielzahl parallel oder in Serie liegender Heizkörper mit gegebenenfalls jeweils vorgeschalteten Thermostatventilen und/oder einem Brauchwasserbereiter bestehen kann, ist mit einer mit einer Umwälzpumpe 25 versehenen Rücklaufleitung 26 an die Rohrschlange 14 des Kondensators 13 angeschlossen, wobei die Rücklauftemperatur über einen Temperaturfühler 27 erfaßt wird, der über eine Meßleitung 28 mit dem Regler 12 verbunden ist. Von der Rohrschlange 14 führt eine Leitung 29 zur Rohrschlange 22 des Absorbers 20, an den eine zum Verbraucher 24 führende, mit einem Temperaturfühler 30 versehene Vorlaufleitung 31 führt, wobei der Temperaturfühler 30 über eine Meßleitung 32 mit dem Regler 12 verbunden ist.

Das Brennstoffmagnetventil 5 ist über eine Stelleitung 33 mit dem Ausgang des Reglers verbunden, die Pumpe 23 weist einen Motor 34 auf, der über eine Stelleitung 35 auch mit dem Ausgang des Reglers 12 verbunden ist.

Dem Regler 12 ist über eine Leitung 36 ein Sollwertgeber 37 zugeordnet, auf den ein Außentemperaturfühler 38 geschaltet ist.

Das Regelverfahren weist folgende Funktionen auf : Für die Funktionsweise wird zunächst davon ausgegangen, daß die Außentemperatur konstant ist, das heißt, der Temperaturfühler 38 gibt denselben beziehungsweise nahezu den gleichen Meßwert ab, und die Temperatur T0 der Umweltenergiequelle 18 ist gleichfalls konstant, so daß der Verdampfer 17 die gleiche Energiemenge in der Zeiteinheit aufnimmt. Somit wird auch der Verbraucher, insbesondere im Falle thermostatventilgesteuerter Heizkörper, die gleiche Wärmeanforderung aufweisen. Diese Wärmeanforderung kann ermittelt werden aus der Höhe der Rücklauftemperatur, die über den Rücklauftemperaturfühler 27 beziehungsweise die Meßleitung 28 auf den Regler 12 gegeben wird. Ergänzend kann auch hierzu die Vorlauftemperatur herangezogen werden, die über den Temperaturfühler 30 beziehungsweise die Meßleitung 32 dem Regler 12 zur Verfügung steht. Zusätzlich könnte hier die Stellung eines Mischventils oder auch der Durchsatz erfaßt werden, beispielsweise, indem ein von der Pumpendrehzahl der Umwälzpumpe 25 abhängiges Signal auf den Regler 12 geschaltet wird. Somit wird der Verbraucher 24 über die Wärmetauscher 14 beziehungsweise 22 dem Kältemittelkreis der Sorptionswärmepumpe eine bestimmte Wärmeleistung entziehen. Diese Wärmeleistung hängt im wesentlichen von der Außentemperatur und dem Aufstellungsort der Wärmepumpe ab, wobei man die sogenannten Klimazonen zu Hilfe nehmen kann, in die das Gebiet der Bundesrepublik Deutschland beziehungsweise bei Aufstellungsorten in anderen Ländern diese eingeteilt sind. Man kann somit dem Sollwertgeber 37 des Reglers eine Heizkurve vorgeben, das heißt einen bestimmten Wärmebedarf für den Verbraucher, ausgedrückt in Werten der Vorlauf- oder Rücklauftemperatur beziehungsweise der Differenz zwischen beiden, die normalerweise etwa den Bedürfnissen des Verbrauchers gerecht wird. Bei abweichenden Bedürfnissen müßte man hier einen abweichenden Sollwert im Sollwertgeber 37 einstellen. Der Sollwert der Druckes beziehungsweise der Temperatur im Hochdruckteil der Wärmepumpe ist somit in Abhängigkeit vom Betriebsort und der Außentemperatur geführt. Er wird weiterhin variabel geführt nach der Art und gegebenenfalls Änderung der Heizungsanlage. Unter Berücksichtigung dieser kriterien ist es somit einleuchtend, daß bei einer bestimmten Leistungsaufnahme im Verdampfer 17 dem Austreiber oder Kocher 1 über den Brenner 4 eine bestimmte Energiemenge in der Zeiteinheit zugeführt werden muß, um die Wärmebilanz des Kältemittelkreislaufes des Wärmepumpe aufrechtzuerhalten. Gleichermaßen muß der Motor 34 der Lösungsmittelumwälzpumpe 23 entsprechend gestellt werden, um den der Wärmebilanz entsprechenden Lösungsumlauf sicherzustellen. Es hat sich gezeigt, daß zu einer bestimmten Wärmelieferung an den Verbraucher ein bestimmter Druck im Hochdruckteil der Wärmepumpe oder eine bestimmte Temperatur im Kocher beziehungsweise Kondensator einzuhalten wesentlich ist, um die der Wärmepumpe über den Brenner 4 zuzuführende Primärenergie zu minimieren. Somit wird über den Druck- beziehungsweise Temperaturfühler 10 der Kondensatordruck überwacht und gemessen und auf den Regler 12 gegeben. Dieser Kondensatordruck beziehungsweise die Kondensatortemperatur wird mit dem Sollwert verglichen, was die Regelabweichung ergibt. Die Regelabweichung wird nunmehr zu Null gebracht, indem die Stellglieder des Reglers, nämlich das Ventil 5 beziehungsweise der Pumpenmotor 34, entsprechend verstellt werden. Hierbei ist vorgesehen, zunächst die Stellgröße des Brennstoffdurchsatzes zu verstellen und anschließend den Durchsatz der Lösungsmittelpumpe nachzuführen. Bei fallendem Druck beziehungsweise fallender Temperatur im Austreiber 1 wird der Brennstoffdurchsatz erhöht und der Durchsatz von reicher Lösung durch die Lösungsmittelpumpe 23 erhöht und umgekehrt.

Der Regler 12 hat Proportional — beziehungsweise Proportional — Integralverhalten. Proportionalverhalten könnte man im Bereich des Brennstoffventils 5 durch ein stetiges Öffnen und Schließen des Ventils in Abhängigkeit von der Regelabweichung beziehungsweise von einer Erhöhung der Spannung des Lösungsmittelpumpenmotors 34 erreichen. Integralverhalten ließe sich erreichen, wenn dem Brennstoffventil 5 ein Stellmotor zugeordnet wird, der bei Auftreten einer Regelabweichung zu laufen beginnt und eine Verstellung so lange vornimmt, wie die Regelabweichung vorhanden ist. Integralverhalten für die Stellbewegung des Motors 34 ließe sich beispielsweise über einen dem Lösungsmittelpumpenmotor 34 zugeordneten Regeltransformator erreichen, dessen Schleifer von einem Motor betätigt ist, der gleichermaßen bei Auftreten der Regelabweichung mit konstanter Geschwindigkeit anläuft und erst zur Ruhe kommt, wenn die Regelabweichung gegen null geht.

Auf den Regelkreis — Kondensatordruck — beziehungsweise — temperaturfühler, Regler 12 und Stellglieder 5 beziehungsweise 23 — wirkt aber wenigstens eine Störgröße in Gestalt des Verbrauchers ein : Ändert nämlich der Verbraucher seine Wärmeanforderung, beispielsweise durch verstärkes Öffnen eines oder mehrerer Thermostatventile oder deren Schließen beziehungsweise durch zusätzliche Wärmeanforderung durch den Brauchwasserspeicher, so werden bei erhöhter Wärmeanforderung der Kondensatordruck beziehungsweise die Kondensatortemperatur sinken beziehungsweise umgekehrt. Über die Meßfühler 27 und 30 wird diese Störgröße sofort erfaßt und an den Regler 12 gegeben. Eine verstärke Wärmeanforderung bedeutet bei thermostatventilgesteuertem Verbraucher einen größeren Durchlaßquerschnitt vor dem Heizkörper und somit einen größeren Durchsatz durch den oder die Heizkörper. Die Folge davon ist eine verkleinerte Temperaturdifferenz zwischen Vor- und Rücklauf. Bei Handventilen wirkt sich eine erhöhte Wärmeanforderung in einer absinkenden Rücklauftemperatur aus, die erst einige Zeit später die Vorlauftemperatur nach unten zeiht. Hierbei bleibt der Durchsatz konstant. Auch dieser Vorgang führt aber zu einer Vergrößerung der Spreizung. Auch wenn ein Brauchwasserspeicher nachgeladen werden muß, findet eine Absenkung der Rücklauftemperatur statt, also eine Erhöhung der Spreizung. Diese Verhältnisse treten unabhängig davon auf, ob der Verbraucher unmittelbar durch Vor- und Rücklauf angesteuert ist oder ob eine Mischerschaltung verwendet ist. Bei Verwendung eines Mischers führt eine erhöhte Wärmeanforderung vom Verbraucher zu einem Drosseln der Mischerbypaßstrecke, die gleichermaßen als Störgröße erfaßbar ist. Man könnte auch einer erhöhten Wärmeanforderung im Verbraucher über eine Steuerung des Durchsatzes der Heizungsumwälzpumpe 25 begegnen, wobei dann als Störgröße die Variation der Motordrehzahl des Antriebsmotors für diese Pumpe ist. In jedem Fall führt eine erhöhte Wärmeanforderung zu einer Regelabweichung, da die erhöhte Wärmeanforderung ein Absinken des Kondensatordrucks beziehungsweise der Kondensatortemperatur nach sich zieht. Der Regelabweichung wird durch Erfassen der Störgröße vorab durch Erhöhen der Brennerleistung entgegengewirkt, indem das Magnetventil 5 weiter geöffnet wird. Die Folge dieser Stellbewegung ist eine vermehrte Energiezufuhr in den Kocher, die sich in einem Ansteigen des Kondensatordrucks beziehungsweise der Kondensatortemperatur auswirkt. Der Gradient des Anstiegs beziehungsweise der Kondensatortemperatur wird über den Meßfühler 11 dem Regler aufgedrückt, und bei Annähern der Regelabweichung an den Nullwert oder bei Überschreiten des Nullwertes wird auch der Durchsatz der Lösungsmittelpumpe 23 in Richtung auf Mehrdurchsatz nachgeführt, indem beispielsweise der Motor 34 in seiner Drehzahl erhöht wird.

Bei fallender Wärmeanforderung im Verbraucher laufen die Erfassungen der Störgröße und die Beaufschlagungen der Stellglieder in umgekehrter Richtung.

Die eben beschriebene Regelung mit Störgrößenaufschaltung könnte man analog auch dem Verdampfer zuordnen. Eine Änderung der vom Verdampfer aufgenommenen Leistung (fallende Außentemperatur T0) wirkt sich nämlich etwa gleich aus wie eine erhöhte Wärmeanforderung durch den Verbraucher. Somit könnte über einen dem Verdampfer zugeordneten Temperaturfühler die Verdampfertemperatur gemessen werden und darüber indirekt die vom Verdampfer aufgenommene Wärmeleistung bestimmt werden. Diese Wärmeleistung wäre dann die Störgröße, die dem Regler aufgeschaltet wird. Unabhängig davon, ob man das Regelverfahren in Abhängigkeit von Zustandsänderungen im Verbraucher oder im Verdampfer oder von beiden durchführt, ist es zweckmäßig, den Kältemitteldurchsatz durch das Expansionsventil beziehungsweise durch den Verdampfer anzupassen an die vom Verdampfer augenommene Leistung beziehungsweise an die vom Verbraucher abgenommene Leistung. Hierzu könnte ein Ventil in der Kältemittelleitung zum Expansionsventil vorgesehen werden, das in einem Puls-Pausen-Verhältnis geöffnet und geschlossen wird, wobei das Puls-Pausen-Verhältnis den Kältemitteldampfdurchsatz diktiert.

## Patentansprüche

1. Verfahren zum Regeln einer Sorptionswärmepumpe mit einem Austreiber, der von einem über einen mit einem Brennstoffventil versehenen Brennstoffzuleitung gespeisten Brenner beheizt wird, einem Kondensator, einem Drosselorgan, einem Rückführorgan für ein Lösungsmittel sowie einem Verdampfer und einem Verbraucher, dessen Kreislauf über Wärmetauscher aufgeheizt wird, die dem Kondensator sowie einem Absorber zugeordnet sind, dadurch gekennzeichnet, daß als Regelgröße der Druck im Hochdruckteil der Sorptionswärmepumpe, als Störgröße die Wärmeanforderung durch den Verbraucher und als Stellgrößen die Variation der Brennsstoffzufuhr und des Durchsatzes von Lösungs- und Kältemittel vorgesehen sind und daß der Sollwert der Regelgröße nach Maßgabe der Außentemperatur am Aufstellungsort der Wärmepumpe variabel ist.

2. Verfahren zum Regeln einer Sorptionswärmepumpe mit einem Austreiber, der von einem über einen mit einem Brennstoffventil versehene Brennstoffleitung gespeisten Brenner beheizt wird, einem Kondensator, einem Drosselorgan, einem Rückführorgan für ein Lösungsmittel sowie einem Verdampfer und einem Verbraucher, dessen Kreislauf über Wärmetauscher aufgeheizt wird, die dem Kondensator sowie einem Absorber zugeordnet sind, dadurch gekennzeichnet, daß als Regelgröße eine Temperatur im Hochdruckteil der Sorptionswärmepumpe, als Störgröße die Wärmeanforderung durch den Verbraucher und als Stellgrößen die Variation der Brennstoffzufuhr und des Durchsatzes von Lösungs- und Kältemittel vorgesehen sind, und daß der Sollwert der Regelgröße nach Maßgabe der Außentemperatur am Aufstellungsort der Wärmepumpe variabel ist.

3. Verfahren nach Anspruch eins oder zwei, dadurch gekennzeichnet, daß die Störgröße über eine Erfassung der Verbrauchervor- und/oder -rücklauftemperaturen ermittelt wird.

4. Verfahren nach einem der Ansprüche eins bis drei, dadurch gekennzeichnet, daß als Stellgrößen die Wärmeleistung des Brenners sowie der Durchsatz der reichen Lösung vorgesehen sind.

5. Verfahren nach Anspruch vier, dadurch gekennzeichnet, daß bei einer Variation der Stellgrößen zuerst die Brennerleistung und anschließend der Durchsatz an reicher Lösung werden.

6. Verfahren nach Anspruch fünf, dadurch gekennzeichnet, daß der Durchsatz der reichen Lösung dann verstellt wird, wenn die Regelabweichung ein Minimum beziehungsweise Null erreicht.

7. Verfahren nach Anspruch sechs, dadurch gekennzeichnet, daß der Durchsatz der reichen Lösung erst dann verstellt wird, wenn der Gradient der sich ändernden Regelabweichung ein Maximum erreicht.

8. Verfahren nach Anspruch eins, dadurch gekennzeichnet, daß als Regelgröße der Druck im Kondensator vorgesehen ist.

9. Verfahren nach Anspruch zwei, dadurch gekennzeichnet, daß als Regelgröße die Temperatur im Kondensator vorgesehen ist.

10. Verfahren nach einem der Ansprüche sechs bis neun, dadurch gekennzeichnet, daß der Durchsatz der Lösung erst dann verstellt wird, wenn der Füllstand im Austreiber einen Grenzwert über- beziehungsweise unterschreitet.

**Claims**

1. A method of automatically controlling a sorption heat pump comprising a generator, which is heated by a burner, which is fed from a fuel supply line provided with a fuel valve, a condenser, a throttling valve, a solvent-recycling device, an evaporator and a consumer having a circuit which is heated by means of heat exchangers associated with the condenser and with an absorber, characterized in that the controlled variable is the pressure in the high-pressure part of the sorption heat pump, the disturbance is the heat demand of the consumer, the manipulated variables are the variations of the fuel supply and of the throughput rates of the solvent and refrigerant, and the desired value of the controlled variable is variable in dependence on the outdoor temperature at the location of the heat pump.

2. A method of automatically controlling a sorption heat pump comprising a generator, which is heated by a burner, which is fed from a fuel supply line provided with a fuel valve, a condenser, a throttling valve, a solvent-recycling device, an evaporator and a consumer having a circuit which is heated by means of heat exchangers associated with the condenser and with an absorber, characterized in that the controlled variable is a temperature in the high-pressure part of the sorption heat pump, the disturbance is the heat demand of the consumer, the manipulated variables are the variations of the fuel supply and of the throughput rates of the solvent and refrigerant, and the desired value of the controlled variable is variable in dependence on the outdoor temperature at the location of the heat pump.

3. A method according to claim 1 or 2, characterized in that the flow and return main temperatures of the consumer are monitored to determine the disturbance.

4. A method according to any of claims 1 to 3, characterized in that the manipulated variables are the heat output of the burner and the throughout of rich solution.

5. A method according to claim 4, characterized in that the burner output is changed first and the throughout rate of rich solution is changed thereafter in case of a change of the manipulated variable.

6. A method according to claim 5, characterized in that the throughout rate of rich solution is changed when the deviation reaches a minimum or zero.

7. A method according to claim 6, characterized in that the throughput rate of rich solution is not changed until the gradient of the changing deviation reaches a maximum.

8. A method according to claim 1, characterized in that the controlled variable is the pressure in the capacitor.

9. A method according to claim 2, characterized in that the controlled variable is the temperature in the condenser.

10. A method according to any of claims 6 to 9, characterized in that the throughout rate of the solution is changed when the liquid level in the generator rises above or falls below a limit.

## Revendications

1. Procédé pour régler la marche d'une thermopompe à sorption comprenant un bouilleur chauffé par un brûleur alimenté par une conduite équipée d'une soupape à combustible, un condenseur, un organe déprimogène, un organe de retour pour un absorbant ainsi qu'un évaporateur et un récepteur dont le circuit est chauffé par l'intermédiaire d'échangeurs de chaleurs adjoints au condenseur et à un absorbeur, caractérisé par le fait qu'il est prévu comme grandeur réglée la pression dans la partie hp de la thermopompe à sorption, comme grandeur perturbatrice les besoins en chaleur du récepteur, et comme grandeurs réglantes la variation de l'alimentation en combustible et du débit en absorbant et frigorigène, et que la consigne pour la grandeur réglée varie en fonction de la température extérieure au lieu d'installation de la thermopompe.

2. Procédé pour régler la marche d'une thermopompe à sorption comprenant un bouilleur chauffé par un brûleur alimenté par une conduite équipée d'une soupape à combustible, un condenseur, un organe déprimogène, un organe de retour pour un absorbant ainsi qu'un évaporateur et un récepteur dont le circuit est chauffé par l'intermédiaire d'échangeurs de chaleur adjoints au condenseur et à un absorbeur, caractérisé par le fait qu'il est prévu comme grandeur réglée une température dans la partie hp de la thermopompe à sorption, comme grandeur perturbatrice les besoins en chaleur du récepteur, et comme grandeurs réglantes la variation de l'alimentation en combustible et du débit en absorbant et frigorigène, et que la consigne pour la grandeur réglée varie en fonction de la température extérieure au lieu d'installation de la thermopompe.

3. Procédé suivant la revendication un ou deux, caractérisé par le fait que la grandeur perturbatrice est déterminée par la mesure des températures d'alimentation et/ou de retour de récepteur.

4. Procédé suivant l'une des revendications un à trois, caractérisé par le fait qu'il est prévu comme grandeurs réglantes l'effet calorifique du brûleur ainsi que le débit en solution riche.

5. Procédé suivant la revendication quatre, caractérisé par le fait qu'en cas de variation des grandeurs réglantes, c'est d'abord l'effet calorifique du brûleur qui est réglé, et ensuite le débit en solution riche.

6. Procédé suivant la revendication cinq, caractérisé par le fait que le débit en solution riche est modifié lorsque l'écart de réglage est un minimum ou atteint zéro.

7. Procédé suivant la revendication six, caractérisé par le fait que le débit en solution riche n'est modifié que si le gradient de l'écart de réglage en variation a atteint un maximum.

8. Procédé suivant la revendication un, caractérisé par le fait qu'il est prévu comme grandeur réglée la pression dans le condenseur.

9. Procédé suivant la revendication deux, caractérisé par le fait qu'il est prévu comme grandeur réglée la température dans le condenseur.

10. Procédé suivant l'une des revendications six à neuf, caractérisé par le fait que le débit en solution n'est modifié que si le niveau de liquide dans le bouilleur est supérieur ou inférieur à une valeur limite.

0 074 360